# EUROPEAN PATENT SPECIFICATION

(11) **EP 0 786 203 B1**
(45) Date of publication and mention of the grant of the patent: **17.04.2002**
(21) Application number: 97200179.6
(22) Date of filing: 21.01.1997
(51) Int. Cl.: A01J 5/017, A01K 29/00

(54) **A method of automatically milking animals**
Verfahren zum automatischen Melken von Tieren
Méthode de traite automatique d'animaux

(30) Priority: 25.01.1996 NL 1002173
(43) Date of publication of application: 30.07.1997
(73) Proprietor: MAASLAND N.V., 3155 PD Maasland (NL)
(72) Inventor: van den Berg, Karel, 2971 BR Bleskensgraaf (NL)
(74) Representative: Corten, Maurice Jean F.M.

(56) References cited:
- EP-A- 0 406 978
- EP-A- 0 705 536
- WO-A-94/19931
- GB-A- 2 076 259
- US-A- 4 618 861

## Description

The present invention relates to a method of automatically milking animals in a milk box, according to the preamble of claim 1.

Such a method is known from WO-A-94/19931. With this known method the functions and the state of health of the animals being milked can be detected, and not any disfunctioning of the milking apparatus.

It is an object of the invention to provide a method of automatically milking animals with which amongst other things information about the functioning of the implement used can be detected.

In accordance with the invention, to that end the method is characterized in that the method comprises the step of comparing the number of movements of one animal during said at least one step with the number of movements of another animal during said at least one step. The number of movements recorded for one or more of the steps are compared in the computer with each other for various animals. Then, on the basis of the result of the comparison of the numbers of movements, the computer will be able to indicate the animals whose numbers of movements deviate at least with a predetermined value from an average value regarding the number of these movements.

In accordance with the invention it is also possible to record the numbers of movements registered for one or more of the steps mentioned in a computer and to average same therein for various animals, whereafter the numbers of movements averaged for the various animals can be compared with each other. Then, on the basis of the result of the comparison of the numbers of movements averaged for the various animals, the computer will be able to give an indication regarding the disfunctioning of one or more parts of the implement used for automatically milking, e.g. because of tearing of the teat lining, wear of the cleaning means, removal of the vacuum, errors in observing the teats and in connecting the teat cups, and the like.

According to the invention it is further possible to record the numbers of movements registered for several of the steps mentioned in a computer and to average same therein for various animals together, whereafter the numbers of movements averaged for various animals together are compared with values established earlier therefor. Then, on the basis of the result of the comparison of the numbers of movements averaged for various animals together, the computer will be able to give an indication regarding the conditions prevailing in the milk box, such as the climate in the stable or cowshed, vermin (flies), and the like.

In other words, by establishing the number of movements during the period of time when an animal to be milked is cleaned and/or during the period of time when teat cups are connected to the teats and/or during the period of time when the animal is milked and/or during the period of time when the teat cups are removed from the teats and/or during the period of time when the teats are disinfected, it is possible, by executing the comparisons and averaging processes indicated above, to obtain an indication regarding the physical condition of the animals, respectively regarding the disfunctioning of one or more parts of the implement used for automatically milking and the conditions prevailing in the milk box.

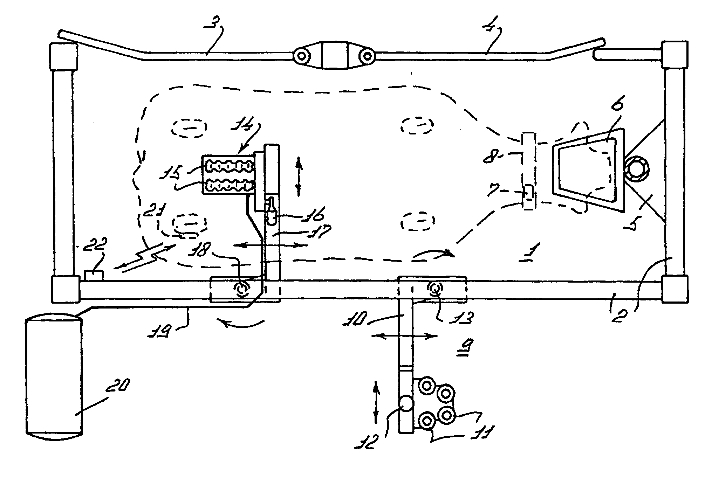

For a better understanding of the invention and to show how the same may be carried into effect, reference will now be made, by way of example, to the embodiment shown in the accompanying drawing.

This drawing shows an implement for automatically milking the animals, in which the method according to the invention can be applied.

In the embodiment shown the implement for automatically milking animals, such as cows, comprises a milk box 1, which is confined by a railing 2 and two doors 3 and 4. Via the entrance door 3 an animal can enter the milk box 1, whereas the animal can leave the milk box 1 via the exit door 4. The milk box 1 further comprises an automatic feeding system 5 including a feed trough 6. Near the feed trough 6, there is arranged a non-shown sensor, which is able to cooperate with a transponder 7 fitted on the collar 8 of the animal. This sensor is connected to a (non-shown) computer and constitutes together with the transponder 7 an animal identification system known per se. By means of this animal identification system animals entering the milk box can be identified. When an animal has been identified in the milk box, then a file concerning the relevant animal is accessible in the computer. The data for the supply of feed and further data concerning the animal that are important for milking are stored in this file. Among these data there are also those concerning the position of the teats of the animal in relation to a certain reference point. Partly on the basis of these data, a milking cluster can be positioned under the udder of the animal. Furthermore the implement is provided with a milking robot 9, which is indicated only schematically in the figure. This milking robot comprises a robot arm 10, on the end of which are arranged teat cups 11 and a detector 12, preferably a laser detector. The robot arm 10 is pivotable about the shaft 13 in such a way that the robot arm 10, which in a condition of rest is arranged outside the milk box, can be pivoted under the udder of the animal; to this effect the robot arm 10, of course, has to be movable in the longitudinal direction in such a way that it can be positioned under the udder through between a foreleg and a hindleg. Apart from being movable in the longitudinal direction of the milk box, the robot arm 10 is also movable in a transverse and an upward direction. When the robot arm 10, inter alia with the aid of the animal identification data, has been positioned under the udder, the position of the teats can be kept up accurately by means of the laser detector 12 and the teat cups 11 can subsequently be connected. Then, the milking proper can be started. Before the milking proper of the animal, the udder, or at least the teats of the animal, will have to be cleaned. For that purpose there are available cleaning means 14 which, in the embodiment shown here, are constituted by a pair of motor-driven cleaning rollers 15, while the teats to be cleaned can be drawn between the two rollers 15 and be cleaned by the rotating motion thereof. The cleaning rollers 15 are defined further in European patent application No. 0 476 771. In the embodiment represented, the cleaning rollers 15, as well as the motor 16 driving same, are disposed near the end of a robot arm 17. Also this robot arm 17 is movable in the longitudinal direction of the milk box, as well as in a transverse direction and in an upward direction. Furthermore, the robot arm is also pivotable about a vertical shaft 18. In addition to the cleaning of the teats, also the removing of foremilk can be realized with the aid of the two cleaning rollers 15. Consequently, the cleaning means 14 can also be active in a cleaning mode, as well as in a foremilking mode, the foremilking mode becoming preferably operative after the cleaning mode and then often only during a fraction of the time required for the cleaning of the teats. There has to be a facility to collect the foremilk removed by means of the cleaning means 14. To that end, a receiver is arranged under the cleaning rollers 15 and the removed foremilk is guided, through a line 19, to the tank 20 disposed for the purpose.

The method of automatically milking animals comprises in principle the following steps: first of all the teats of the animal to be milked are cleaned and foremilk is removed if required, whereafter the teat cups are connected to the teats, the animal is milked, the teat cups are removed from the teats and the teats are disinfected if desired. When the cleaning of the teats takes place in the teat cups, as described in European patent application No. 0 332 235, the method will of course pass off in an other sequence: first the teat cups are connected to the teats, whereafter the teats are cleaned, foremilk is removed if required and the animal is milked.

In case the teats have to be disinfected, there may be arranged a disinfecting device, such as described in European patent application No. 0 535 754. These disinfecting means are not shown in the figure.

The animals are further provided with a step counter 21, preferably fitted on one of the legs, in order to be able to establish the number of movements carried out by the animals in a determined interval of time. This step counter 21 is provided with a transmitter and receiver element and is able to cooperate with a transponder 22 connected to the computer and arranged near the milk box. When an animal enters the milk box and cleaning of the teats is started, the step counter 21 is reset and started, while after the cleaning of the teats has ended and the cleaning rollers have been removed the step counter 21 is stopped and the number of movements registered during cleaning is recorded in the computer via the transponder. Resetting, starting and stopping the step counter are repeated at further steps in the method of automatically milking, in particular when the teat cups are connected, respectively the animal is milked and the teats are disinfected if desired. In this manner for one or more of the mentioned steps separately the number of movements carried out by the animals is registered and recorded in the computer. From these data information can be deduced about the physical condition of the animals, the implement used for automatically milking and the conditions prevailing in the milk box.

The number of movements recorded in the computer, registered during cleaning of the teats and/or during connecting the teat cups and/or during milking of the animal and/or during further steps in the method described can be compared with each other for various animals. When for one or some of the animals a significantly different number of movements is registered in relation to the number of movements registered for the other animals, this is a first indication to further examine the behaviour of these animals. This further examination can be executed on the basis of historic data, i.e. on the basis of the numbers of movements registered for the relevant animal/animals registered during an earlier (previous) visit of the animal/animals. When it appears that the number of movements of an animal does not only deviate obviously from the number of movements registered for the other animals, but also deviates from the number earlier registered for said animal, then it is a matter of behavioural change of the animal, which may be the result of e.g. teat or hoof injuries, heat, diseases, psychological factors, such as anxiety, and the like.

An other manner of processing the numbers of movements recorded in the computer is averaging the numbers registered for the various animals visiting the milking box, so that an average number of movements for the animals is obtained during cleaning, during connecting, during milking, etc. When it appears that the average number of movements carried out by the animals during one of these steps deviates significantly from the average number of movements during the other steps, this will be an indication that there is something wrong with the implement used during this step. When for example the animals show a deviating activity during cleaning, this may be a matter of wear of the cleaning means. When the animals show a deviating behaviour during connecting of the teat cups, there may be a defect in observing the teats and connecting the teats in such a way that the animals are troubled thereby. When the animals in average show a deviating behaviour during milking, this may be a matter of damaged teat cups, e.g. of tearing of the teat lining, and the like.

A further method of processing of the registered data is obtained when the average number of movements for all the animals and for a number of the steps mentioned is recorded, e.g. the average number of movements for all the animals during the period of time when the teats are cleaned, the cups are connected and the milking takes place, and subsequently the result of this averaging process is compared with corresponding values, obtained in earlier periods of time, e.g. one day or more days earlier. When a significant deviation will be established, there may have changed something in the conditions prevailing in the milk box. For example the climate in the cowshed may have changed, the trouble caused by vermin, such as flies, may have increased significantly, etc.

Of course, it will be possible to combine mutually the various methods of processing, averaging, comparing etc. the data obtained via the step counter and to obtain information regarding the physical condition of the animals as well as the way in which the implement used for automatically milking functions and the conditions prevailing in the cowshed.

The invention is by no means restricted to the embodiment described and shown in the drawing, but also relates to all sorts of modifications thereof, of course, falling within the scope of the following claims.

## Claims

1. A method of automatically milking a number of animals in a milk box, said method comprising at least one step chosen from the group consisting of:
1) cleaning the teats of an animal to be milked,
2) connecting teat cups to the teats of said animal,
3) milking the animal,
4) removing the teat cups from the teats, and
5) disinfecting the teats,
said method further comprising the step of recording the number of movements of the animal during said at least one step in a computer or similar equipment, **characterized in that** the method comprises the step of comparing the number of movements of one animal during said at least one step with the number of movements of another animal during said at least one step.

2. A method as claimed in claim 1, **characterized in that**, on the basis of the result of the comparison of the numbers of movements, the computer will indicate the animals whose numbers of movements deviate at least with a predetermined value from an average value regarding the number of these movements.

3. A method as claimed in any one of the preceding claims, **characterized in that** the numbers of movements recorded during said at least one step are averaged therein for various animals, whereafter the numbers of movements averaged for the various animals are compared with each other.

4. A method as claimed in claim 3, **characterized in that**, on the basis of the result of the comparison of the numbers of movements averaged for the various animals, the computer will give an indication regarding the disfunctioning of one or more parts of the implement used for automatically milking, e.g. because of tearing of the teat lining, wear of the cleaning means, removal of the vacuum, errors in observing the teats and in connecting the teat cups, and the like.

5. A method as claimed in claim 3 or 4, **characterized in that** the numbers of movements registered for several of the steps mentioned are recorded in a computer and are averaged therein for various animals together, whereafter the numbers of movements averaged for various animals together are compared with values established earlier therefor.

6. A method as claimed in claim 5, **characterized in that** on the basis of the result of the comparison of the numbers of movements averaged for various animals together, the computer will give an indication regarding the conditions prevailing in the milk box, such as the climate in the stable or cowshed, vermin, flies, and the like.

7. A method as claimed in any one of the preceding claims, **characterized in that** for recording the number of movements a step counter (21) attached to the animals is used, the step counter cooperating with a transponder (22) connected to the computer, which transponder is arranged near the milk box (1).

8. A method as claimed in claim 7, **characterized in that** by means of the transponder (22) and a receiver in the step counter the step counter (21) is reset and started at the beginning of said at least one step.

9. A method as claimed in claim 8, **characterized in that** by means of the transponder (22) and a receiver in the step counter the step counter (21) is stopped at the end of said at least one step.

10. A method as claimed in claim 9, **characterized in that** the number of steps registered during said at least one step is registered in the computer by means of a transmitter in the step counter and the transponder (22).

## Patentansprüche

1. Verfahren zum automatischen Melken einer Anzahl von Tieren in einer Melkbox, wobei das Verfahren mindestens einen Verfahrensschritt aus der Gruppe umfaßt, die aus folgenden Verfahrensschritten besteht:
1) Reinigen der Zitzen eines zu melkenden Tieres,
2) Anschließen von Zitzenbechern an die Zitzen des Tieres,
3) Melken des Tieres,
4) Abnehmen der Zitzenbecher von den Zitzen und
5) Desinfizieren der Zitzen,
wobei das Verfahren ferner den Verfahrensschritt des Aufzeichnens der Anzahl von Bewegungen des Tieres während des mindestens einen Verfahrensschrittes in einem Computer oder einer ähnlichen Vorrichtung umfaßt,
**dadurch gekennzeichnet, daß** das Verfahren den Verfahrensschritt des Vergleichens der Anzahl von Bewegungen eines Tieres während des mindestens einen Verfahrensschrittes mit der Anzahl von Bewegungen eines anderen Tieres während des mindestens einen Verfahrensschrittes umfaßt.

2. Verfahren nach Anspruch 1,
**dadurch gekennzeichnet, daß** der Computer auf der Basis des Ergebnisses des Vergleiches der Anzahl von Bewegungen die Tiere anzeigt, deren Anzahl von Bewegungen zumindest um einen vorgegebenen Wert von einem Mittelwert bezüglich der Anzahl dieser Bewegungen abweicht.

3. Verfahren nach einem der vorhergehenden Ansprüche,
**dadurch gekennzeichnet, daß** für die während des mindestens einen Verfahrensschrittes aufgezeichnete Anzahl von Bewegungen darin ein Mittelwert für verschiedene Tiere gebildet wird, wonach die Werte für die Anzahl von Bewegungen, für die für die verschiedenen Tiere ein Mittelwert gebildet wurde, miteinander verglichen werden.

4. Verfahren nach Anspruch 3,
**dadurch gekennzeichnet, daß** auf der Basis des Ergebnisses des Vergleiches der Anzahl von Bewegungen, für die für die verschiedenen Tiere ein Mittelwert gebildet wurde, der Computer eine Anzeige liefert bezüglich der Fehlfunktion eines oder mehrerer Teile der zum automatischen Melken verwendeten Vorrichtung, beispielsweise wegen Verschleiß der Zitzenbecherauskleidung, Abnutzung der Reinigungsvorrichtung, Abschalten des Vakuums, Fehlern beim Überwachen der Zitzen und Anschließen der Zitzenbecher und dergleichen.

5. Verfahren nach Anspruch 3 oder 4,
**dadurch gekennzeichnet, daß** die Anzahl von Bewegungen, die für mehrere der genannten Verfahrensschritte registriert wurde, in einem Computer aufgezeichnet wird und darin ein Mittelwert für verschiedene Tiere gemeinsam gebildet wird, wonach die Anzahl von Bewegungen, für die ein Mittelwert für verschiedene Tiere gemeinsam gebildet wurde, mit Werten verglichen wird, die früher hierfür ermittelt wurden.

6. Verfahren nach Anspruch 5,
**dadurch gekennzeichnet, daß** auf der Basis des Ergebnisses des Vergleiches der Werte für die Anzahl von Bewegungen, für die für verschiedene Tiere gemeinsam ein Mittelwert gebildet wurde, der Computer eine Anzeige bezüglich der in der Melkbox herrschenden Bedingungen, wie z. B. Klima im Stall oder Kuhstall, Ungeziefer, Fliegen und dergleichen, liefert.

7. Verfahren nach einem der vorhergehenden Ansprüche,
**dadurch gekennzeichnet, daß** zum Aufzeichnen der Anzahl von Bewegungen ein an den Tieren angebrachter Schrittzähler (21) verwendet wird, wobei der Schrittzähler mit einem mit dem Computer verbundenen Transponder (22) zusammenwirkt, der nahe der Melkbox (1) angeordnet ist.

8. Verfahren nach Anspruch 7,
**dadurch gekennzeichnet, daß** mittels des Transponders (22) und eines Empfängers im Schrittzähler der Schrittzähler (21) zurückgestellt und zu Beginn des mindestens einen Verfahrensschrittes gestartet wird.

9. Verfahren nach Anspruch 8,
**dadurch gekennzeichnet, daß** mittels des Transponders (22) und eines Empfängers im Schrittzähler der Schrittzähler (21) am Ende des mindestens einen Verfahrensschrittes gestoppt wird.

10. Verfahren nach Anspruch 9,
**dadurch gekennzeichnet, daß** die während des mindestens einen Verfahrensschrittes registrierte Anzahl von Schritten in dem Computer mit Hilfe eines Senders im Schrittzähler und des Transponders (22) aufgezeichnet wird.

## Revendications

1. Procédé de traite automatique d'un nombre d'animaux dans une stalle de traite, ladite méthode comprenant au moins une étape choisie parmi un ensemble d'étapes consistant à :
1)nettoyer les trayons de l'animal devant être trait,
2)poser les gobelets trayeurs aux trayons dudit animal,
3)traire l'animal,
4)enlever les gobelets trayeurs des trayons, et
5)désinfecter les trayons,
ledit procédé comprenant en outre l'étape consistant à enregistrer du nombre de mouvements de l'animal durant au moins une desdites étapes dans un ordinateur ou équipement semblable, **caractérisé en ce que** la méthode comprend l'étape de comparaison du nombre de mouvements d'un animal durant au moins une desdites étapes au nombre de mouvements d'un autre animal durant au moins une desdites étapes.

2. Procédé selon la revendication 1, **caractérisé en ce que**, basé sur le résultat de comparaison du nombre de mouvements, l'ordinateur va indiquer les animaux dont le nombre de mouvements dévie d'une valeur moyenne relative au nombre de ces mouvements avec au moins une valeur déterminée.

3. Procédé selon l'une quelconque des revendications précédentes, **caractérisé en ce que** la moyenne des nombres de mouvements enregistrés durant au moins une desdites étapes est établie pour plusieurs animaux, après quoi les moyennes des nombres de mouvements pour plusieurs animaux sont comparées les unes aux autres.

4. Procédé selon la revendication 3, **caractérisé en ce qu'**en se basant sur le résultat de comparaison des moyennes du nombre de mouvements pour plusieurs animaux, l'ordinateur indiquera un éventuel disfonctionnement d'une ou plusieurs parties de l'instrument utilisé pour la traite automatique tel que par exemple, une déchirure dans les revêtements, une usure des moyens de nettoyage, une évacuation du vide, des erreurs lors de la localisation des trayons et dans la pose des gobelets trayeurs, et analogue.

5. Procédé selon la revendication 3 ou 4, **caractérisé en ce que** les nombres de mouvements enregistrés pour plusieurs des étapes mentionnées sont enregistrés dans un ordinateur faisant la moyenne pour plusieurs animaux ensemble, après quoi la moyenne faite pour les nombres de mouvements de plusieurs animaux ensemble est comparée à des valeurs établies auparavant.

6. Procédé selon la revendication 5, **caractérisé en ce que** basé sur le résultat de comparaison de la moyenne des nombres de mouvements pour plusieurs animaux ensemble, l'ordinateur indiquera les conditions de la stalle de traite, telles que le climat dans l'étable ou l'écurie, la vermine, les mouches.

7. Procédé selon l'une quelconque des revendications précédentes, **caractérisé en ce qu'**afin d'enregistrer le nombre de mouvements un compteur de pas (21) attaché à l'animal est utilisé, le compteur de pas (21) étant capable de co-opérer avec un répondeur (22) relié à l'ordinateur dont le répondeur est placé à proximité de la stalle de traite (1).

8. Procédé selon la revendication 7, **caractérisé en ce que**, à l'aide du répondeur (22) et d'un récepteur dans le compteur de pas, le compteur de pas (21) est remis à zéro est mis en marche au début d'au moins une desdites étapes.

9. Procédé selon la revendication 8, **caractérisé en ce que**, à l'aide du répondeur (22) et d'un récepteur dans le compteur de pas, le compteur de pas (21) est mis à l'arrêt à la fin d'au moins une desdites étapes.

10. Procédé selon la revendication 9, **caractérisé en ce que** le nombre de mouvements enregistrés durant au moins une desdites étapes est noté dans l'ordinateur à l'aide d'un transmetteur dans le compteur de pas et du répondeur (22).
